# EUROPÄISCHE PATENTSCHRIFT

(11) **EP 1 469 019 B1**
(45) Veröffentlichungstag und Bekanntmachung des Hinweises auf die Patenterteilung: **15.02.2006**
(21) Anmeldenummer: 04016616.7
(22) Anmeldetag: 07.01.2000
(51) Int. Cl.: C08F 255/00, C08F 222/06, C10L 1/18, C08L 23/08, C08L 51/00

(54) **Zusammensetzungen und ihre Verwendung als Additiv zur Verbesserung der Kaltfliesseigenschaften von Mitteldestillaten, sowie Brennstofföl enthaltend diese Zusammensetzungen**
Compositions and their use as additives for improving cold flow properties of middle distillates, as well as fuel oil comprising said compositions
Compositions et leur utilisation pour l'amélioration des propriétés d'écoulement à froid des distillats moyens, ainsi que huile combustible contenant lesdites compositions

(30) Priorität: 19.01.1999 DE 19901803
(43) Veröffentlichungstag der Anmeldung: 20.10.2004
(62) Teilanmeldung aus: 00100333.4
(73) Patentinhaber: Clariant GmbH, 65929 Frankfurt am Main (DE)
(72) Erfinder: Krull, Matthias Dr., 55296 Harxheim (DE); Nagel, Waltraud, 46147 Oberhausen (DE)
(74) Vertreter: Mikulecky, Klaus

(56) Entgegenhaltungen:
- DE-A- 4 330 971
- DE-A- 19 508 656
- US-A- 5 733 993

## Beschreibung

Die vorliegende Erfindung betrifft Zusammensetzungen, enthaltend Copolymere, enthaltend Struktureinheiten von Olefinen, modifiziertem Maleinsäureanhydrid und Polyolefinen, sowie ihre Verwendung als Zusatz zu Brennstoffölen zur Verbesserung ihrer Kaltfließeigenschaften.

Rohöle und durch Destillation von Rohölen gewonnene Mitteldestillate wie Gasöl, Dieselöl oder Heizöl, enthalten je nach Herkunft der Rohöle unterschiedliche Mengen an n-Paraffinen, die bei Erniedrigung der Temperatur als plättchenförmige Kristalle auskristallisieren und teilweise unter Einschluß von Öl agglomerieren. Dadurch kommt es zu einer Verschlechterung der Fließeigenschaften dieser Öle bzw. Destillate, wodurch beispielsweise bei Gewinnung, Transport, Lagerung und/oder Einsatz der Mineralöle und Mineralöldestillate Störungen auftreten können. Bei Mineralölen kann dieses Kristallisationsphänomen beim Transport durch Rohrleitungen vor allem im Winter zu Ablagerungen an den Rohrwänden, in Einzelfällen, z.B. bei Stillstand einer Pipeline, sogar zu deren völliger Verstopfung führen. Auch bei der Lagerung und Weiterverarbeitung der Mineralöle kann die Ausfällung von Paraffinen Schwierigkeiten verursachen. So kann es im Winter unter Umständen erforderlich sein, die Mineralöle in beheizten Tanks zu lagern. Bei Mineralöldestillaten können als Folge der Kristallisation Verstopfung der Filter in Dieselmotoren und Feuerungsanlagen auftreten, wodurch eine sichere Dosierung der Brennstoffe verhindert wird und gegebenenfalls eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (sogenannte Fließverbesserer oder Paraffin-Inhibitor) entwickelt, die durch physikalisches Zusammenwirken mit den ausfallenden Paraffinkristallen dazu führen, daß deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl von kleineren Paraffinkristallen mit veränderter Kristallform resultiert. Ein Teil der Wirkung der Additive wird auch durch eine Dispergierung der Paraffinkristalle erklärt. Die modifizierten Paraffinkristalle neigen weniger zur Aggtomeration, so daß sich die mit diesen Additiven versetzten Öle noch bei Temperaturen pumpen bzw. verarbeiten lassen, die oft mehr als 20° tiefer liegen als bei nicht additivierten Ölen.

Das Fließ- und Kälteverhalten von Mineralölen und Mineralöldestillaten wird unter anderem durch Angabe des Cloud Points (bestimmt nach ISO 3015), des Pour-Points (bestimmt nach ISO 3016) und des Cold-Filter-Plugging-Points (CFPP; bestimmt nach EN 116) beschrieben. Diese Kenngrößen werden in °C gemessen.

Typische Fließverbesserer für Rohöle und Mitteldestillate sind Copolymerisate des Ethylens mit Carbonsäureestern des Vinylalkohols. So setzt man nach der DE-A-11 47 799 Erdöldestillat-Treib- bzw. -Brennstoffen mit einem Siedepunkt zwischen etwa 120 und 400°C öllösliche Mischpolymerisate aus Ethylen und Vinylacetat mit einem Molekulargewicht zwischen etwa 1.000 und 3.000 zu. Bevorzugt werden Mischpolymerisate, die etwa 60 bis 99 Gew.% Ethylen und etwa 1 bis 40 Gew.-% Vinylacetat enthalten. Sie sind besonders wirksam, wenn sie durch radikalische Polymerisation in einem inerten Lösungsmittel bei Temperaturen von etwa 70 bis 130°C und Drücken von 35 bis 2.100 atü hergestellt wurden (DE-A-19 14 756).

Im Stand der Technik sind weiterhin sogenannte Kammpolymere bekannt, die sich von ethylenisch ungesättigten Monomeren mit längeren (z.B. C₈-C₃₀), bevorzugt linearen, Alkylresten ableiten. Diese werden vor allem in höhersiedenden, paraffinreichen Mineralölen, gegebenenfalls in Kombination mit EthylenCopolymeren zur Verbesserung der Kaltfließeigenschaften eingesetzt (z.B. GB-A-1 469 016 und EP-A-0 214 786). Gemäß EP-A-0 153 176 werden Kammpolymere mit C₁₂-C₁₄-Alkylresten auch in eng geschnittenen Destillaten mit z.B. 90-20 % Destillationsbereichen von <100°C und Siedeenden von etwa 340 - 370°C eingesetzt. Gemäß US-2 542 542 und GB-A-1 468 588 werden mit langkettigen Fettalkoholen veresterte Copolymere aus Maleinsäureanhydrid (MSA) und α-Olefinen zur Behandlung von Rohölen eingesetzt.

EP-A-0 719 290 offenbart ein Copolymer aus einer monoethylenisch ungesättigten Carbonsäure mit 4 bis 6 Kohlenstoffatomen, einem Oligomeren des Propens bzw. eines verzweigten α-Olefins mit 4 bis 10 Kohlenstoffatomen und einer weiteren monoethylenisch ungesättigten Verbindung, die mit den genannten Verbindungen copolymerisierbar ist. Durch Umsetzung mit einem Amin werden daraus öllösliche Reaktionsprodukte erhalten, die sich als Additive für Schmieröle und Kraftstoffe eignen. Das Dokument offenbart keine Zusammensetzung aus einem Maleinsäureester, einem Polyolefin und einem α-Olefin.

WO-90/03359 offenbart Copolymere aus Polyolefinen, die mehr als 32 C-Atome aufweisen, und olefinisch ungesättigten Carbonsäuren oder Derivaten. Die im Dokument aufgeführten Ester werden allerdings nicht spezifiziert.

DE-A-20 50 071 offenbart mit Fettalkoholen veresterte Copolymere aus einer ethylenisch ungesättigten Dicarbonsäure oder deren Derivaten mit einem α-Olefin mit mindestens 20 Kohlenstoffatomen. Das Dokument offenbart aber beispielsweise keine Polyolefine als Comonomer für die Copolymere.

Bevorzugtes Herstellverfahren für die Copolymere ist gemäß z.B. DE-A-2 050 071 und EP-A-214 786 die lösemittelfreie Massepolymerisation, von MSA und α-Olefinen, wobei hochmolekulare Copolymere entstehen und nachfolgende Veresterung. Die Copolymere aus MSA und α-Olefinen als Zwischenstufe für die durch Veresterung mit Fettalkoholen daraus hergestellten Additive weisen jedoch bedingt durch ihre hohen Molekulargewichte eine erhöhte Steifigkeit auf. Diese macht sich in so hohen Viskositäten und Erstarrungspunkten bemerkbar, daß die Polymere nur bei erhöhten Temperaturen handhabbar sind. Aus diesem Grund muß ihre Verarbeitung, Formulierung und Lagerung bei erhöhter Temperatur erfolgen, oder es muß am Ende ihres Herstellungsverfahrens sofort eine Lösung von ihnen in einem geeigneten Lösungsmittel hergestellt werden.

DE-A-43 30 971 beschreibt funktionelle Gruppen tragende Copolymerisate aus 20-60 Mol% mindestens einer monoethylenisch ungesättigten C4-C6-Dicarbonsäure oder deren Anhydrid, 10-70 Mol% mindestens eines Oligomeren des Propens oder eines zerzweigten 1-Olefins mit 4 bis 10 Kohlenstoffatomen und einen mittleren Molekulargewichts Mw von 300 bis 5000 und 1-50 Mol% mindestens einer monoethylenisch ungesättigten Verbindung, die mit den Monomeren a) und b) copolymerisierbar ist, sowie deren Verwendung als Additiv für Schmierstoffe und Kraftstoffe.

Die der vorliegenden Erfindung zugrunde liegende Aufgabe bestand somit darin, einen wirksamen Kaltfließverbesserer für Mineralöle (Rohöle und Mitteldestillate) auf Basis veresterter Dicarbonsäuren und linearer α-Olefine, der aber trotzdem bei niedrigeren Temperaturen verarbeitbar ist, zu finden.

Überraschenderweise wurde gefunden, daß der Einbau gewisser Mengen verzweigter Polyolefine die Wirksamkeit der Ester als Kaltfließverbesserer nicht beeinträchtigt, aber die Handhabbarkeit der lösemittelfreien, Anhydridgruppen tragenden Terpolymere deutlich erleichtert. Weiterhin werden auch die Löslichkeit der Additive im zu additivierenden Öl und die Stabilität der Additivkonzentrate sowie ihre Abmischungen mit anderen zur Öladditivierung eingesetzten Polymeren, wie z.B. EVA-Copolymeren, verbessert.

Gegenstand der Erfindung sind Zusammensetzungen, enthaltend Copolymere, enthaltend
A) 45 bis 54 mol-% bivalente Struktureinheiten der Formel 1 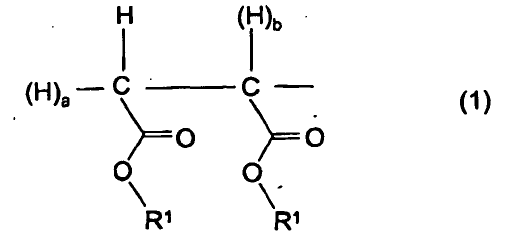 worin a, b = 0 oder 1 und a + b = 1 sind,
B) 35 bis 53 mol-% bivalente Struktureinheiten der Formel 2

   -H₂C-CHR²- (2)

   und
C) 1 bis 25 mol-%, bevorzugt 1 bis 20 mol-%, bivalente Struktureinheiten, die sich von Polyolefinen ableiten, wobei die Polyolefine aus Monoolefinen mit 3 bis 5 Kohlenstoffatomen ableitbar sind,
   dadurch gekennzeichnet, daß
   a) R¹ einen Alkyl- oder Alkenylrest mit 10 bis 40 Kohlenstoffatomen oder einen Alkoxyalkylrest mit 1 bis 100 Alkoxyeinheiten und 1 bis 30 Kohlenstoffatomen im Alkylrest, und
   b) R² einen Alkylrest mit 10 bis 50 Kohlenstoffatomen bedeutet,
   c) der Alkylvinylidengehalt der den Struktureinheiten C) zugrundeliegenden Polyolefine mindestens 50 mol-% beträgt, und
   d) die Zahl der Kohlenstoffatome der den Struktureinheiten C) zugrunde liegenden Polyolefinmoleküle zwischen 35 und 350 beträgt, und β) Copolymerisate, die 10 bis 40 Gew.-% Vinylacetat und 60 bis 90 Gew.-% Ethylen enthalten,
      wobei das Mischungsverhältnis α:β zwischen 20:1 und 1:20 nach Gewichtsteilen beträgt.

Bei den Strukturemheiten der der Formel 1 zugrunde liegenden Verbindungen handelt es sich um Ester der Malein-, Fumar- oder Itaconsäure. Die bevorzugten Kettenlängen für den Rest R¹ richten sich nach der beabsichtigten Verwendung der Copolymeren. Soll das Copolymer als Kaltfließverbesserer für Mitteldestillate verwendet werden, so ist R¹ ein Alkylrest von vorzugsweise 10 bis 24, insbesondere 12 bis 20 Kohlenstoffatomen. Neben dem Einsatz einzelner Alkohole R¹-OH hat sich hier die Verwendung von Alkoholmischungen z.B. aus Dodecanol und Tetradecanol oder Tetradecanol und Hexadecanol im Verhältnis 1:10 bis 10:1, insbesondere 3:1 bis 1:3 besonders bewährt. Durch Variation der Alkoholkomponente kann das Additiv dem zu behandelnden Öl angepaßt werden. So kann z.B. durch Zugabe von beispielsweise 15 Gew.-% Behenylalkohol zu oben genannten Mischungen die Wirksamkeit in Ölen mit extrem hohem Siedeende von > 390°C, insbesondere >410°C optimiert werden. Soll das Copolymer als Pour Point Depressant, z.B. in Roh- und Rückstandsölen Verwendung finden, so haben sich Reste R¹ von 16 bis 40, vorzugsweise von 16 bis 30, Kohlenstoffatomen als besonders geeignet erwiesen. Die Reste R¹ können linear oder verzweigt sein, wobei die Verzweigung ein sekundäres oder tertiäres Kohlenstoffatom umfassen kann. Lineare Reste R¹ sind bevorzugt. Ist R¹ verzweigt, dann trägt es diese Verzweigung vorzugsweise in 2-Stellung. Es ist möglich, verschiedene Reste R¹ zu verwenden, d.h. bei der Herstellung der Maleinsäure-, Itaconsäure- und/oder Fumarsäureester Mischungen verschiedener Alkohole einzusetzen.

Bevorzugte Alkohole R¹-OH sind beispielsweise 1-Decanol, 1-Dodecanol, 1-Tridecanol, Isotridecanol, 1-Tetradecanol, 1-Hexadecanol, 1-Octadecanol, Eicosanol, Docosanol, Tetracosanol, deren Mischungen, sowie natürlich vorkommende Mischungen wie z.B. Cocosfettalkohol, Talgfettalkohol und Behenylalkohol. Die Alkohole können natürlichen wie auch synthetischen Ursprungs sein.

In einer weiteren bevorzugten Ausführungsform handelt es sich bei den Resten R¹ um Alkoxyalkylreste der Formel 3

-(O-A)_{X}-R³ (3)

worin A für einen C₂-C₄-Alkylenrest, x für eine ganze Zahl von 1 bis 100 und R³ für einen C₁-C₃₀-Alkylrest steht. Die (O-A)-Einheit ist vorzugsweise eine Ethoxy- oder Propoxyeinheit. Werden alkoxylierte Einheiten der Formel (3) für R¹ verwendet, so geschieht das vorzugsweise in Mischung mit Resten R¹, die nicht alkoxyliert sind. Der Anteil der alkoxylierten Reste R¹ übersteigt vorzugsweise 20 mol-% (bezogen auf alle Reste R¹) nicht. R³ kann linear oder verzweigt sein. Ist R³ verzweigt, so liegt die Verzweigung vorzugsweise in 2-Stellung. Bevorzugt ist R³ linear.

Die Struktureinheiten der Formel 2 leiten sich von α-Olefinen ab. Diese α-Olefine haben von 10 bis 50, vorzugsweise 12 bis 40 Kohlenstoffatome. Die Kohtenstoffkette der α-Olefine kann geradkettig oder verzweigt sein, vorzugsweise ist sie geradkettig. Beispiele für geeignete Olefine sind 1-Dodecen, 1-Tetradecen, 1-Tridecen, 1-Hexadecen, 1-Heptadecen, 1-Octadecen, 1-Nonadecen, 1-Eicosen, 1-Hemicosen, 1-Docosen, 1-Tetracosen, 1-Hexacosen, 1-Octacosen etc. sowie deren Mischungen. Ebenfalls geeignet sind kommerziell erhältliche Olefin-Fraktionen, wie z.B. C₂₀-C₂₄- oder C₃₀₊-Olefin. Auch hier ist die Auswahl des Olefins vom Verwendungszweck abhängig. Während kurzkettige Olefine im Bereich C₁₄-C₂₂ in Mitteldestillaten die besten Ergebnisse liefern, erfordern Roh- und Rückstandsöle langkettige Olefine wie z.B. C₂₀-C₂₄- oder C₃₀₊-Olefin-Fraktionen.

Die unter C) genannten Struktureinheiten sind von Polyolefinen abgeleitet, die sich von Monoolefinen mit 3,4 oder 5 Kohlenstoffatomen ableiten lassen. Besonders bevorzugte Monoolefine als Grundkörper der Polyolefine sind Propylen und Isobutylen, woraus Polypropylen und Polyisobutylen als Polyolefine entstehen. Die Polyolefine haben vorzugsweise einen Alkylvinylidengehalt von mindestens 50 mol-%, insbesondere von mindestens 70 mol-%, speziell mindestens 75 %. Die der radikalischen Polymerisation nicht zugänglichen Polyolefine verbleiben als nicht copolymerisierte Bestandteile im Produkt, was sich auch positiv auf die Mischbarkeit der Ester sowie deren Mischungen mit anderen Polymeren auswirkt. Unter Alkylvinylidengehalt versteht man den Gehalt der Polyolefine an Struktureinheiten, die äuf Verbindungen der Formel 4 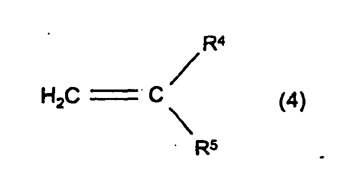 zurückgehen, worin R⁴ oder R⁵ Methyl oder Ethyl bedeuten und die andere Gruppe ein Oligomeres des C₃-C₅-Olefins ist. Die Zahl der Kohlenstoffatome des Polyolefins beträgt zwischen 35 und 350. In einer bevorzugten Ausführungsform der Erfindung beträgt die Zahl der Kohlenstoffatome zwischen 45 und 250. In einer weiteren bevorzugten Ausführungsform der Erfindung beträgt der Anteil der Struktureinheiten C) 1 bis 20 mol-%, insbesondere 2 bis 15 mol-%.

Die den Struktureinheiten C) zugrunde liegenden Polyolefine sind durch ionische Polymerisation zugänglich, und als Handelsprodukte eihältlich (z.B. ®Ultravis, ®Napvis, ®Hyvis, ®Glissopal) (Polyisobutene von BP, BASF mit unterschiedlichen Alkylvinylidengehalten und Molekulargewichten).

Die mittlere Molekülmasse der erfindungsgemäßen Copolymere beträgt im allgemeinen zwischen 1.500 und 200.000 g/mol, insbesondere zwischen 2.000 und 100.000 g/mol (GPC gegen Polystyrolstandards in THF).

Die Herstellung der erfindungsgemäßen Copolymere erfolgt vorzugsweise bei Temperaturen zwischen 50 und 220 °C, insbesondere 100 bis 190 °C, speziell 130 bis 170°C. Das bevorzugte Herstellungsverfahren ist die lösemittelfreie Massepolymerisation, es ist jedoch auch möglich, die Polymerisation in Gegenwart aprotischer Lösemittel wie Toluol, Xylol oder von Lösemittelgemischen wie Kerosin oder Solvent Naphtha durchzuführen. Besonders bevorzugt ist die Polymerisation in wenig moderierenden, aliphatischen oder isoaliphatischen Lösemitteln. Bei der Lösungspolymerisation kann die Temperatur durch den Siedepunkt des Lösemittels oder durch Arbeiten unter Unter- oder Überdruck besonders einfach eingestellt werden.

Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxid-carbonat, t-Butylperpivalat, t-Butylpermaleinat, t-Butylperbenzoat, Dicumylperoxid, t-Butylcumylperoxid, Di-(t-butyl)peroxid, 2,2'-Azo-bis(2-methylpropanonitril) oder 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Monomerengemisch, eingesetzt. Die Copolymere können durch Copolymerisation von Polyolefin (Komponente. C) und α-Olefin (Komponente B) mit entweder Itacon- oder Maleinsäureanhydrid oder Maleinsäure-, Fumarsäure-, Itaconsäureester hergestellt werden. Wird eine Copolymerisation mit Anhydriden durchgeführt, so wird das entstandene Copolymer nach der Herstellung verestert. Diese Veresterung erfolgt beispielsweise durch Umsetzung mit 1,5 bis 2,5 mol Alkohol pro mol Anhydrid bei 50 bis 300, insbesondere 120 - 250 °C. Das Reaktionswasser kann mittels eines Inertgasstroms abdestilliert oder mittels azeotroper Destillation ausgetragen werden. Copolymere mit Säurezahlen von weniger als 50, insbesondere weniger als 30, speziell weniger als 20 mg KOH/g sind bevorzugt.

Ein weiterer Gegenstand der Erfindung ist die Verwendung der erfindungsgemäßen Zusammensetzungen als Additiv für Brennstofföle zur Verbesserung der Kaltfließeigenschaften dieser Brennstofföle.

Ein weiterer Gegenstand der Erfindung sind Brennstofföle, die die erfindungsgemäßen Copolymere Zusammensetzungen enthalten.

Die erfindungsgemäßen Copolymere werden Mineralölen oder Mineralöldestillaten in Form von Lösungen oder Dispersionen zugesetzt. Diese Lösungen oder Dispersionen enthalten vorzugsweise 1 bis 90, insbesondere 5 bis 80 Gew.-% der Mischungen. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ®Shellsol AB, ®Solvesso 150, ®Solvesso 200, ®Exxsol-, ®ISOPAR- und ®Shellsol D-Typen sowie aliphatische oder aromatische Alkohole, Ether und/oder Ester. Die angegebenen Lösemittelgemische enthalten unterschiedliche Mengen an aliphatischen und/oder aromatischen Kohlenwasserstoffen. Die Aliphaten können geradkettig (n-Paraffine) oder verzweigt sein (iso-Paraffine). Aromatische Kohlenwasserstoffe können mono-, di- oder polyzyklisch sein und gegebenenfalls einen oder mehrere Substituenten tragen. Durch die erfindungsgemäßen Copolymere in ihren rheologischen Eigenschaften verbesserte Mineralöle oder Mineralöldestillate enthalten 0,001 bis 2, vorzugsweise 0,005 bis 0,5 Gew.-% der Copolymere, bezogen auf das Destillat.

Zur Herstellung von Additivpaketen für spezielle Problemlösungen können die Copolymere auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind Vinylester enthaltende Co- oder Terpolymerisate des Ethylens, Alkylphenol-Aldehydharze und polare Verbindungen, die eine Paraffindispergierung bewirken (Paraffindispergatoren).

So haben sich Mischungen der erfindungsgemäßen Copolymere mit Copolymerisaten hervorragend bewährt, die 10 bis 40 Gew.-% Vinylacetat und 60 bis 90 Gew.-% Ethylen enthalten. Als Fließverbesserer sind auch Copolymere des Ethylens mit einem oder mehreren C₁-C₃₀-Alkylvinylestern, C₁-C₃₀-Alkyl-(meth)acrylaten und/oder Olefinen geeignet. Insbesondere geeignet sind Vinylacetat, Vinylpropionat, Vinylbutyrat, Vinylhexanoat, Vinyloctanoat, Neodecansäure-, Neononansäurevinylester, Methylacrylat, Ethylacrylat, 2-Ethylhexylacrylat, Laurylacrylat, Stearylacrylat sowie die entsprechenden Ester der Methacrylsäure. Geeignete -Olefine sind z.B. Propen, Isobutylen, Diisobutylen, 4-Methylpenten und Nobornen. Desgleichen können auch Mischungen verschiedener Fließverbesserer mit unterschiedlicher quantitativer (z.B. Comonomergehalt) und/oder qualitativer Zusammensetzung (Art der Co-/Terpolymere, Molekulargewicht, Verzweigungsgrad) eingesetzt werden.

Nach einer bevorzugten Ausgestaltung der Erfindung setzt man die erfindungsgemäßen Copolymere in Mischung mit Ethylen/Vinylacetat/Neononansäurevinylester-Terpolymerisaten oder Ethylen-Vinylacetat/Neodecansäurevinylester-Terpolymerisaten zur Verbesserung der Fließfähigkeit von Mineralölen oder Mineralöldestillaten ein. Die Terpolymerisate der Neononansäurevinylester bzw. der Neodecansäurevinylester enthalten außer Ethylen 10 bis 35 Gew.-% Vinylacetat und 1 bis 25 Gew.-% der jeweiligen Neoverbindung.

In weiterer bevorzugter Ausführungsform der Erfindung werden die erfindungsgemäßen Copolymere mit Terpolymeren eingesetzt, die neben Ethylen 10 - 35 Gew.-% Vinylester und 0,5 bis 20 Gew.-% Olefine wie z.B. Diisobutylen, Hexen, 4-Methylpenten und/oder Norbornen enthalten.

Das Mischungsverhältnis der Copolymere mit den vorstehend beschriebenen Ethylen/Vinylacetat-Copolymerisaten bzw. den Terpolymerisaten aus Ethylen, Vinylacetat und den Vinylestern der Neononan- bzw. der Neodecansäure bzw. aus Ethylen, Vinyliden und Olefinen beträgt (in Gewichtsteilen) 20:1 bis 1:20, vorzugsweise 10:1 bis 1:10. Die Mischungen der Copolymere mit den genannten Copolymerisaten sind insbesondere zur Verbesserung der Fließfähigkeit von Mitteldestillaten geeignet.

Ferner können die erfindungsgemäßen Copolymere in Mischung mit Alkylphenol-Formaldehydharzen eingesetzt werden. In einer bevorzugten Ausführungsform der Erfindung handelt es sich bei diesen Alkylphenol-Formaldehydharzen um solche der Formel 5 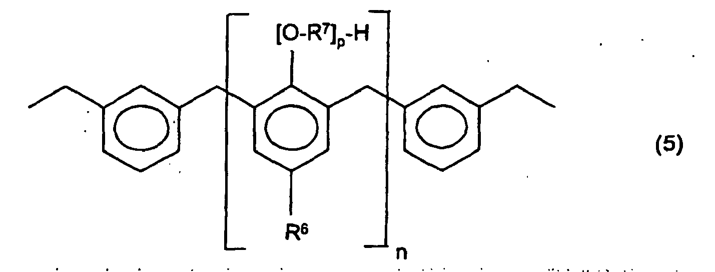
worin R⁶ für C₄-C₅₀-Alkyl oder -Alkenyl, R⁷ für Ethoxy- und/oder Propoxy, n für eine Zahl von 5 bis 100 und p für eine Zahl von 0 bis 50 steht. Paraffindispergatoren reduzieren die Größe der Paraffinkristalle und bewirken, daß die Paraffinpartikel sich nicht absetzen, sondern kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden. Andere Paraffindispergatoren sind Copolymere des Maleinsäureanhydrids und α,β-ungesättigten Verbindungen, die gegebenenfalls mit primären Monoalkylaminen und/oder aliphatischen Alkoholen umgesetzt werden können, die Umsetzungsprodukte von Alkenylspirobislactonen mit Aminen und Umsetzungsprodukte von Terpolymerisaten auf Basis α,β-ungesättigter Dicarbonsäureanhydride, α,β-ungesättigter Verbindungen und Polyoxyalkylenether niederer ungesättigter Alkohole. Auch Alkylphenol-Formaldehydharze sind als Paraffindispergatoren geeignet.

Das Mischungsverhältnis (in Gewichtsteilen) der Copolymere mit Paraffindispergatoren beträgt jeweils 1:10 bis 20:1, vorzugsweise 1:1 bis 10:1.

Die Zusammensetzung eignen sich dazu, die Kaltfließeigenschaften von Rohölen, Destillatölen oder Brennstoffölen sowie Schmierölen zu verbessern. Die Öle können mineralischen, tierischen wie auch pflanzlichen Ursprungs sein.

Als Brennstofföle sind neben Roh- und Rückstandsölen Mitteldestillate besonders gut geeignet. Als Mitteldestillate bezeichnet man insbesondere solche Mineralöle, die durch Destillation von Rohöl gewonnen werden und im Bereich von 120 bis 500°C sieden, wie beispielsweise Kerosin, Jet-Fuel, Diesel und Heizöl. Sie können Anteile an alkoholischen Treibstoffen, wie z.B. Ethanol und Methanol, oder auch Biobrennstoffe, wie z.B. Rapsöl oder Rapsölsäuremethylester, enthalten. Die erfindungsgemäßen Brennstoffe enthalten vorzugsweise weniger als 350 ppm und speziell weniger als 200 ppm Schwefel. Ihr mit GC bestimmter Gehalt an n-Paraffinen, die Kettenlängen von 18 Kohlenstoffatomen oder mehr aufweisen, liegt bei mindestens 8 Flächen-%, bevorzugt bei mehr als 10 Flächen-%. Ihr 95 %-Destillationspunkt liegt vorzugsweise oberhalb 350°C, insbesondere oberhalb 370°C, speziell oberhalb 380°C.

Die Copolymere können allein oder auch zusammen mit anderen Zusatzstoffen verwendet werden, beispielsweise mit Entwachsungshiffsmitteln, Leitfähigkeitsverbesseren, Entschäumem, Dispergierhilfsmittel, Korrosionsinhibitoren, Antioxidantien, Lubricity-Additiven, Dehazern oder Schlamminhibitoren. Die Additivkomponenten können den zu additivierenden Ölen gemeinsam als Konzentratmischung in geeigneten Lösemitteln oder auch getrennt zugesetzt werden.

### Beispiele

Herstellung und Charakterisierung der eingesetzten Additive

Bei den eingesetzten Poly(olefinen) handelt es sich um Handelsprodukte (®Ultravis) der Fa. BP Chemicals. Das eingesetzte C_{20/24}-Olefin ist eine Mischung von 1-Olefinen enthaltend als Hauptkomponenten 2 % C₁₈, 48 % C₂₀, 36 % C₂₂ und 7 % C₂₄.

Allgemeine Herstellvorschrift 1: Polymerisation von MSA mit Olefinen (P1 bis P12)

In einem Rundkolben mit Rührer, Innenthermometer, Rückflußkühler, Gaseinleitungsrohr und zwei Dosiertrichtern wird die in der Tabelle angegebene Mischung aus Olefin und Poly(isobutylen) unter Durchleiten von Stickstoff und Rühren bei 150-160°C vorgelegt. Aus separaten Vorlagen werden kontinuierlich geschmolzenes Maleinsäureanhydrid und eine Lösung von di-tert.-Butylperoxid in Kerosin derart zugegeben, daß die in Tabelle 1 angegebene Maximaltemperatur eingehalten wird, was etwa 1-1,5 Stunden dauert. Es wird 2 Stunden bei 150°C nachreagiert und anschließend abgefüllt.

**Tabelle 1: Herstellungsbeispiele Polymerisation**

| Beispiel | Mol MSA | Olefin | | Poly(olefin) | | Tₘₐₓ |
|---|---|---|---|---|---|---|
| | | mol | Kettenlänge | mol | Mw | |
| P1 | 1,0 | 0,9 | C_{20/24} | 0,1 | 800 | 160 °C |
| P2 | 1,0 | 0,9 | C_{20/24} | 0,1 | 1300 | 160 °C |
| P3 | 1,0 | 0,95 | C_{20/24} | 0,05 | 1300 | 160 °C |
| P4 | 1,0 | 0,9 | C₁₈ | 0,1 | 800 | 170 °C |
| P5 | 1,0 | 0,8 | C₁₈ | 0,2 | 800 | 170 °C |
| P6 | 1,0 | 0,7 | C₁₈ | 0,3 | 800 | 170 °C |
| P7 | 1,0 | 0,9 | C₁₈ | 0,1 | 1300 | 170 °C |
| P8 | 1,0 | 0,8 | C₁₈ | 0,2 | 1300 | 170 °C |
| P9 | 1,0 | 0,7 | C₁₈ | 0,3 | 1300 | 160 °C |
| P10 (Vgl.) | 1,0 | 1,0 | C_{20/24} | - | | 160 °C |
| P11 (Vgl.) | 1,0 | 1,0 | C_{20/24} | - | | 190 °C |
| P12 (Vgl.) | 1,0 | 1,0 | C₁₈ | - | | 170 °C |

**Tabelle 2: Viskositätsverhalten der MSA-Olefin-Co- und Terpolymere Die Bestimmung der Viskosität erfolgt gemäß ISO 3219 (B) mit einem Rotationsviskosimeter (Haake RV 20) mit Platte-Kegel-Meßsystem. Die Bestimmung des Molekulargewichts erfolgte mittels Gelpermeationschromatographie in THF gegen Poly(styrol)-Standards und RI-Detektion.**

| Beispiel | Mw | V₁₆₀ | V₁₄₀ | V₁₂₀ |
|---|---|---|---|---|
| P1 | 5.900 | 2,38 Pas | 14,08 Pas | >30 Pas |
| P2 | 8.100 | 1,10 Pas | 3,38 Pas | 25 Pas |
| P3 | 5.850 | 2,79 Pas | 13,20 Pas | >30 Pas |
| P4 | 5.530 | 2,15 Pas | 9,35 Pas | >30 Pas |
| P5 | 5.620 | 0,69 Pas | 1,28 Pas | 5,32 Pas |
| P6 | 5.900 | 0,36 Pas | 0,71 Pas | 2,96 Pas |
| P7 | 5.860 | 1,12 Pas | 3,56 Pas | 25 Pas |
| P8 | 7.030 | 0,55 Pas | 0,89 Pas | 2,85 Pas |
| P9 | 6.410 | 0,27 Pas | 0,35 Pas | 0,69 Pas |
| P10 (Vgl.) | 6.050 | 4,69 Pas | 29,27 Pas | > 50 Pas |
| P11 (Vgl.) | 3.990 | 0,17 Pas | 0,36 Pas | 1,18 Pas |
| P12 (Vgl.) | 5.460 | 4,39 Pas | 24,84 Pas | > 50 Pas |

Diese Viskositätsmessungen zeigen, daß Fließfähigkeit und Handhabbarkeit der erfindungsgemäßen Terpolymere bei niedrigeren Temperaturen gewährleistet sind als bei den bekannten Copolymeren. Das bei höherer Temperatur polymerisierte Vergleichsmuster P11 zeigt zwar eine sehr niedrigere Viskosität, hat aber keine vergleichbare Wirksamkeit (vgl. Tabelle 4).

Allgemeine Herstellvorschrift 2: Polymeranaloge Veresterung Das MSA-Co- bzw. -Terpolymer wird in einem Dreihalskolben mit Rührer, Innenthermometer und Wasserabscheider unter leichtem Erwärmen in gleichen Gewichtsteilen Solvent Naphtha gelöst. Nach Zugabe der angegebenen Mengen Behenylalkohol (nativer Fettalkohol, enthaltend als Hauptkomponenten 2 % Octadecanol, 63 % Eicosanol, 31 % Docosan) Tetradecanol, Hexadecanol und/oder alkoxylierten Behenylalkohols pro Mol einpolymerisiertem Maleinsäureanhydrid wird 12 Stunden lang unter Rückfluß (ca. 220°C) gekocht. Es wird mit Solvent Naphtha auf 50 % Polymergehalt verdünnt und abgefüllt.

**Tabelle 3: Herstellbeispiele Veresterung**

| Beispiel | Polymer | Alkohol | Säurezahl |
|---|---|---|---|
| E1 | P1 | 1,6 mol Behenylalkohol | 14 |
| E2 | P2 | 1,6 mol Behenylalkohol | 13 |
| E3 | P3 | 1,6 mol Behenylalkohol | 14 |
| E4 (Vgl.) | P10 | 1,6 mol Behenylalkohol | 15 |
| E5 (Vgl.) | P11 | 1,6 mol Behenylalkohol | 15 |
| E6 | P4 | 2 mol Tetradecanol | 15 |
| E7 | P4 | 1,6 mol Tetradecanol | 13 |
| E8 | P5 | 2 mol Tetradecanol | 13 |
| E9 | P6 | 2 mol Tetradecanol | 16 |
| E10 | P7 | 2 mol Tetradecanol | 15 |
| E11 | P8 | 2 mol Tetradecanol | 18 |
| E12 (Vgl.) | P12 | 2 mol Tetradecanol | 15 |
| E13 | P4 | 1 mol Tetradecanol + 1 mol Hexadecanol | 17 |
| E14 | P4 | 1,8 mol Tetradecanol + 0,2 mol Behenylalkohol x 12 EO | 16 |
| E15 | P4 | 1,5 mol Tetradecanol 0,5 mol Behenylalkohol | 15 |

### Beispiel E 16:

0,5 mol Fumarsäure-Dibehenylester, 0,05 mol Poly(isobutylen) mit Molekulargewicht 800 und 0,45 mol C_{20/24}-Olefin werden in einem Mehrhalskolben unter Rühren und Durchleiten von Stickstoff auf 140°C erwärmt. Es wird eine Lösung von di-tert.-Butylperoxid in Kerosin derart zugegeben, daß die Reaktionstemperatur 150°C nicht übersteigt. Es wird 2 Stunden bei 140°C nachgerührt, mit der gleichen Menge Solvent Naphtha verdünnt und abgefüllt.

Die veresterten Polymere wurden auf ihre Wirksamkeit als Pour Point Depressanten in einem Rückstandsöl mit Eigenstockpunkt von 45°C untersucht. Die Messungen erfolgen in Anlehnung an ISO 3016 mit einem Pour Point Automaten Herzog MC 850 der Fa. Herzog.

**Tabelle 4: Wirksamkeit der veresterten Terpolymere als Pour Point Depressant**

| Beispiel | 660 ppm | 1200 ppm |
|---|---|---|
| E1 | + 36 °C | + 30 °C |
| E2 | + 36 °C | + 30 °C |
| E3 | + 33 °C | + 30 °C |
| E16 | + 33 °C | + 30 °C |
| E4 (Vgl.) | + 36 °C | + 33 °C |
| E5 (Vgl.) | + 45 °C | + 36 °C |

Weiterhin eignen sich die erfindungsgemäßen Terpolymere als Coadditive (Kammpolymere) zu Ethylencopolymeren in Mitteldestillaten, insbesondere in Mitteldestillaten mit hohem Siedeende (>370 °C, insbesondere >380 °C) und/oder hohem Cloud Point >0 °C.

**Tabelle 5: Charakterisierung der Testöle Die Bestimmung der Siedekenndaten erfolgt gemäß ASTM D-86, die Bestimmung des CFPP-Werts gemäß EN 116 und die Bestimmung des Cloud Points gemäß ISO 3015.**

| | Testöl 1 | Testöl 2 |
|---|---|---|
| Siedebeginn [°C] | 179 | 155 |
| 20 % [°C] | 242 | 212 |
| 90 % [° | 365 | 390 |
| 95% [°C] | 388 | 402 |
| Cloud Point [°C] | + 4,4 | + 13 |
| CFPP [°C] | - 2 | + 11 |

**Tabelle 6: CFPP-Wirksamkeit in Testöl 1 Die Messung des CFPP-Werts erfolgt gemäß EN 116. Als Fließverbesserer werden 4 Gewichtsteile eines handelsüblichen Ethylen-Vinylacetat-Copolymer mit einem Vinylacetatgehalt von 28 Gew.-% und einer bei 140°C gemessenen Schmelzviskosität von 320 mPas pro Gewichtsteil des erfindungsgemäßen Esters verwendet.**

| Beispiel | 100 ppm | 200 ppm | 300 ppm | 400 ppm |
|---|---|---|---|---|
| E6 | -12 | -15 | -18 | -18 |
| E7 | -13 | -14 | -15 | -18 |
| E8 | -10 | -16 | -16 | -19 |
| E9 | -6 | -5 | -8 | -12 |
| E10 | -12 | -16 | 16 | -19 |
| E11 | -5 | -14 | -16 | -17 |
| E12 (Vgl.) | -8 | -14 | -15 | -17 |
| E13 | -10 | -12 | -14 | -17 |
| E14 | -12 | -13 | -15 | -16 |
| E15 | -12 | -15 | -17 | -17 |

Die Wirksamkeit der erfindungsgemäßen Terpolymere ist bei Polyolefinanteile im Olefingemisch von < 30 mol-% den entsprechenden Copolymeren überlegen.

**Tabelle 7: CFPP-Wirksamkeit in Testöl 2 Die Messung des CFPP-Werts erfolgt gemäß EN 116. Als Fließverbesserer werden 2 Gewichtsteile eirier Mischung zweier handelsüblichger Ethyten-Vinylester-Copolymere (Terpolymer mit 31 Gew.-% Vinylacetat, 9 Gew.-% Neononansäurevinylester und einer bei 140°C gemessenen Schmelzviskosität V₁₄₀ von 230 mPas und Ethylen-4-Methylpenten-Vinylacetat-Terpolymer mit 24 % Vinylacetat und V₁₄₀ von 300 mPas) im Verhältnis 3:1 pro Gewichtsteil des erfindungsgemäßen Esters verwendet.**

| Beispiel | 300 ppm | 500 ppm | 600 ppm | 1.000 ppm |
|---|---|---|---|---|
| E6 | +2 | +2 | -2 | -6 |
| E11 (Vgl.) | + 3 | + 4 | +2 | -2 |
| E12 | +2 | -1 | -2 | -5 |
| E13 | +5 | +3 | -1 | -6 |

### Phasenstabilität

Mit Solvent Naphtha auf 50 Gew.-% verdünnte Einstellungen der erfindungsgemäßen Polymere wurden mit 4 Teilen einer handelsüblichen 70 %igen Fließverbesserersuspension (EVA-Copolyrner mit 26 % Vinylacetat und V₁₄₀ von 280 mPas versetzt und durch 30-minütiges Rühren bei 80°C homogenisiert. Anschließend wurden die bei 50°C gelagerten Proben visuell auf Phasenstabilität geprüft.

| Muster | 2 Tage | 7 Tage | 14 Tage |
|---|---|---|---|
| E6 | homogen | 1 % Sediment | 3 % Sediment |
| E7 | homogen | homogen | 0,5 % Sediment |
| E8 | homogen | homogen | homogen |
| E9 | homogen | homogen | 1 % Sediment |
| E10 | homogen | homogen | homogen |
| E11 (Vgl.) | 2 % Sediment | 6 % Sediment | 10 % Sediment |

Die Ergebnisse zeigen die durch den Einbau von Poly(isobutylen) verbesserte Phasenstabilität der erfindungsgemäßen Polymere in Abmischung mit Ethylen-Vinylester-Copolymeren.

## Patentansprüche

1. Zusammensetzung, enthaltend
α) Copolymere, enthaltend
A) 45 bis 54 mol-% bivalente Struktureinheiten der Formel 1 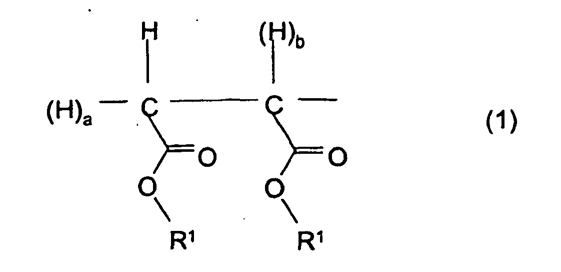 worin a, b = 0 oder 1 und a + b = 1 sind,
B) 35 bis 53 mol-% bivalente Struktureinheiten der Formel 2
-H₂C-CHR²- (2)
und
C) 1 bis 25 mol-% bivalente Struktureinheiten, die sich von Polyolefinen ableiten, wobei die Polyolefine aus Monoolefinen mit 3 bis 5 Kohlenstoffatomen ableitbar sind, **dadurch gekennzeichnet, daß**
a) R¹ einen Alkyl- oder Alkenylrest mit 10 bis 40 Kohlenstoffatomen oder einen Alkoxyalkylrest mit 1 bis 100 Alkoxyeinheiten und 1 bis 30 Kohlenstoffatomen im Alkylrest, und
b) R² einen Alkylrest mit 10 bis 50 Kohlenstoffatomen bedeutet,
c) der Alkylvinylidengehalt der den Struktureinheiten C) zugrundeliegenden Polyolefine mindestens 50 mol-% beträgt, und
d) die Zahl der Kohlenstoffatome der den Struktureinheiten C) zugrunde liegenden Polyolefinmoleküle zwischen 35 und 350 beträgt, und
β) Copolymerisate, die 10 bis 40 Gew.-% Vinylacetat und 60 bis 90 Gew.-% Ethylen enthalten,
wobei das Mischungsverhältnis α:β zwischen 20:1 und 1:20 nach Gewichtsteilen beträgt.

2. Zusammensetzung nach Anspruch 1, **dadurch gekennzeichnet, daß** R¹ einen Rest der Formel 3 bedeutet
-(O-A)ₓ- R³ (3)
worin A für C₂-C₄-Alkyl, x für eine Zahl von 1 bis 100 und R³ für C₁-C₃₀-Alkyl steht.

3. Zusammensetzung nach Anspruch 1 und/oder 2, **dadurch gekennzeichnet, daß** die bivalenten Struktureinheiten, die sich von Polyolefinen ableiten, sich von Polypropylen oder Polyisobutylen ableiten.

4. Zusammensetzung nach Anspruch 3, **dadurch gekennzeichnet, daß** das Polypropylen oder Polyisobutylen mindestens 50 mol-% Alkylvinylideneinheiten enthält.

5. Zusammensetzung nach einem oder mehreren der Ansprüche 1 bis 4, **dadurch gekennzeichnet, daß** die Molekülmasse des Bestandteils α) zwischen 5000 und 200.000 Einheiten beträgt.

6. Zusammensetzung nach einem oder mehreren der Ansprüche 1 bis 5, **dadurch gekennzeichnet, daß** sie als Bestandteil *β*) Ethylen/Vinylacetat! Neononansäurevinylester-Terpolymerisate oder Ethylen-Vinylacetat/Neodecansäurevinylester-Terpolymerisate enthält, die außer Ethylen 10 bis 35 Gew.-% Vinylacetat und 1 bis 25 Gew.-% der jeweiligen Neoverbindung enthalten.

7. Zusammensetzung nach einem oder mehreren der Ansprüche 1 bis 6, **dadurch gekennzeichnet, daß** sie als Bestandteil β) Terpolymere enthält, die neben Ethylen 10 - 35 Gew.-% Vinylester und 0,5 bis 20 Gew.-% Olefine enthalten.

8. Zusammensetzung nach Anspruch 7, **dadurch gekennzeichnet, daß** das Olefin Diisobutylen, Hexen, 4-Methylpenten und/oder Norbornen ist.

9. Verwendung einer Zusammensetzung nach einem oder mehreren der Ansprüche 1 bis 8 zur Verbesserung der Kaltfließeigenschaften von Brennstoffölen, Rohölen und Destillatölen.

10. Verwendung nach Anspruch 9, **dadurch gekennzeichnet, daß** als Bestandteil α) ein Copolymer mit R¹ = C₁₀-C₂₄-Alkyl als Kaltfließverbesserer verwendet wird.

11. Verwendung nach Anspruch 9, **dadurch gekennzeichnet, daß** als Bestandteil α) ein Copolymer mit R¹ = C₁₆-C₄₀-Alkyl als pour point depressant verwendet wird.

12. Brennstofföl, enthaltend 0,001 bis 2 Gew.-% einer Zusammensetzung nach einem oder mehreren der Ansprüche 1 bis 8.

## Claims

1. A composition containing
α) copolymers containing
A) from 45 to 54 mol%. of divalent structural units of the formula 1 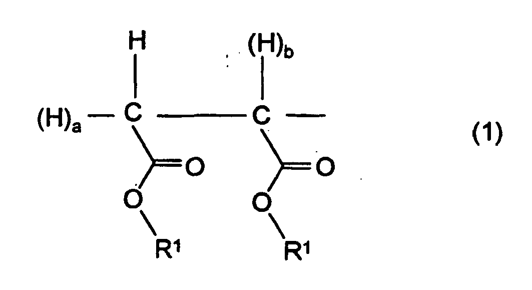 in which a and b = 0 or 1 and a + b = 1,
B) from 35 to 53 mol% of divalent structural units of the formula 2
- H₂C - CHR² - (2)
and
C) from 1 to 25 mol% of divalent structural units derived from polyolefins, where the polyolefins can be derived from monoolefins having 3 to 5 carbon atoms,
**characterized in that**
a) R¹ is an alkyl or alkenyl radical having 10 to 40 carbon atoms or an alkoxyalkyl radical having 1 to 100 alkoxy units and 1 to 30 carbon atoms in the alkyl radical, and
b) R² is an alkyl radical having 10 to 50 carbon atoms,
c) the alkylvinylidene content of the polyolefins on which the structural units C) are based is at least 50 mol%, and
d) the number of carbon atoms in the polyolefin molecules on which the structural units C) are based is from 35 to 350 and
β) copolymers which contain from 10 to 40% by weight of vinyl acetate and from 60 to 90% by weight of ethylene,
wherein the mixing ratio α:β is between 20:1 and 1:20 in terms of parts by weight.

2. A composition as claimed in claim 1, **characterized in that** R¹ is a radical of the formula 3
- (O-A)ₓ - R³ (3)
in which A is C₂-C₄-alkyl, x is a number from 1 to 100, and R³ is C₁-C₃₀-alkyl.

3. A composition as claimed in claim 1 and/or 2, **characterized in that** the divalent structural units derived from polyolefins are derived from polypropylene or polyisobutylene.

4. A composition as claimed in claim 3, **characterized in that** the polypropylene or polyisobutylene contains at least 50 mol% of alkylvinylidene units.

5. A composition as claimed in one or more of claims 1 to 4, **characterized in that** the molecular mass of the constituent α) is from 5000 to 200 000 units.

6. A composition as claimed in one or more of claims 1 to 5, **characterized in that** constituent β) comprises ethylene-vinyl acetate-vinyl neononanoate terpolymers or ethylene-vinyl acetate-vinyl neodecanoate terpolymers which, as well as ethylene, contain from 10 to 35% by weight of vinyl acetate and from 1 to 25% by weight of the respective neocompound.

7. A composition as claimed in one or more of claims 1 to 6, **characterized in that** constituent β) comprises terpolymers which, as well as ethylene, contain 10-35% by weight of vinyl ester and from 0.5 to 20% by weight of olefins.

8. A composition as claimed in claim 7, **characterized in that** the olefin is diisobutylene, hexene, 4-methylpentene and/or norbornene.

9. The use of a composition as claimed in one or more of claims 1 to 8 for improving the cold-flow properties of fuel oils, crude oils and distillate oils.

10. The use as claimed in claim 9, **characterized in that** constituent α) comprises a copolymer where R¹ = C₁₀-C₂₄-alkyl as a cold-flow improver.

11. The use as claimed in claim 9, **characterized in that** constituent α) comprises a copolymer where R¹ = C₁₆-C₄₀-alkyl as a pour point depressant.

12. A fuel oil containing from 0.001 to 2% by weight of a composition as claimed in one or more of claims 1 to 8.

## Revendications

1. Composition contenant
α) un copolymère contenant
A) 45 à 54 % en moles de motifs structuraux bivalents de formule 1 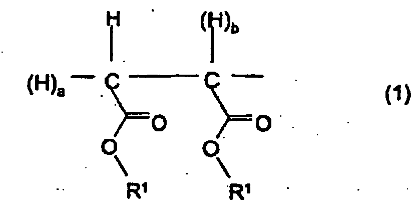
dans laquelle a,b = 0 ou 1 et a+b = 1,
B) 35, à 53 % en moles de motifs structuraux bivalents de formule 2
- H₂C - CHR² - (2)
et
C) 1 à 25 % en moles de motifs structuraux bivalents qui dérivent de polyoléfines, les polyoléfines pouvant être obtenues à partir de monooléfines ayant 3 à 5 atomes de carbone,
**caractérisée en ce que**
a) R¹ est un radical alkyle ou alcényle ayant 10 à 40 atomes de carbone ou un radical alcoxyalkyle ayant 1 à 100 motifs alcoxy et 1 à 30 atomes de carbone dans le résidu alkyle, et
b) R² est un radical alkyle ayant 10 à 50 atomes de carbone,
c) la teneur en radicaux alkylvinylidène des polyoléfines qui sont à la base des motifs structuraux C) est d'au moins 50 % en moles, et
d) le nombre des atomes de carbone des molécules de polyoléfine qui sont à la base des motifs structuraux C) est compris entre 35 et 350, et
β) des copolymères contenant 10 à 40 % en poids d'acétate de vinyle et 60 à 90 % en poids d'éthylène,
le rapport de mélange α:β étant compris entre 20:1 et 1:20 en parties en poids.

2. Composition selon la revendication 1, **caractérisée en ce que** R¹ est un radical de formule 3
- (O-Aₓ) - R³ (3)
dans laquelle A est un groupe alkyle en C₂-C₄, x est un nombre de 1 à 100 et R³ est un groupe alkyle en C₁-C₃₀.

3. Composition selon la revendication 1 et/ou 2, **caractérisée en ce que** les motifs structuraux bivalents qui dérivent de polyoléfines dérivent du polypropylène ou du polyisobutylène.

4. Composition selon la revendication 3, **caractérisée en ce que** le polypropylène ou le polyisobutylène contient au moins 50 % en moles de motifs alkylvinylidène.

5. Composition selon l'une ou plusieurs des revendications 1 à 4, **caractérisée en ce que** la masse moléculaire du constituant α) est comprise entre 5000 et 200 000 unités.

6. Composition selon l'une ou plusieurs des revendications 1 à 5, **caractérisée en ce qu'**elle contient en tant que constituant β) des terpolymères éthylène/acétate de vinyle/néononaoate de vinyle, ou des terpolymères éthylène-acétate de vinyle/néodécanoate de vinyle, qui outre l'éthylène contiennent 10 à 35 % en poids d'acétate de vinyle et 1 à 25 % en poids du composé néo considéré.

7. Composition selon l'une ou plusieurs des revendications 1 à 6, **caractérisée en ce qu'**elle contient en tant que constituant β) des terpolymères qui outre l'éthylène contiennent 10 à 35 % en poids d'esters vinyliques et 0,5 à 20 % en poids d'oléfines.

8. Composition selon la revendication 7, **caractérisée en ce que** l'oléfine est le diisobutylène, l'hexène, le 4-méthylpentène et/ou le norbornène.

9. Utilisation d'une composition selon l'une ou plusieurs des revendications 1 à 8 pour améliorer les propriétés d'écoulement à froid de mazouts, de pétroles bruts et de distillats.

10. Utilisation selon la revendication 9, **caractérisée en ce qu'**on utilise en tant que constituant α) un copolymère dans lequel R¹ est un groupe alkyle en C₁₀-C₂₄ en tant qu'améliorant les propriétés d'écoulement à froid.

11. Utilisation selon la revendication 9, **caractérisée en ce qu'**on utilise en tant que constituant α) un copolymère dans lequel R¹ est un groupe alkyle en C₁₀-C₄₀ en tant qu'agent abaissant le point d'écoulement.

12. Mazout contenant 0,001 à 2 % en poids d'une composition selon l'une ou plusieurs des revendications 1 à 8.
